# EUROPEAN PATENT APPLICATION

(11) **EP 1 175 119 A2**
(43) Date of publication of application: **23.01.2002**
(21) Application number: 01305685.8
(22) Date of filing: 29.06.2001
(51) Int. Cl.: H04Q 7/38

(54) **Network selection in a mobile telecommunications system**

(30) Priority: 18.07.2000 GB 0017611
(71) Applicant: NOKIA MOBILE PHONES LTD., 02150 Espoo (FI)
(72) Inventor: Vestergaard, Peter, DK -3050 Humlebaek (DK); Dalsgaard, Lars, FIN-90230 Oulu (FI); Jutila,sami, Fin- 90570, Oulu (FI)
(74) Representative: Read, Matthew Charles

(57) **Abstract**

A mobile station such as a telephone handset (1) for a mobile radio telecommunications system, is operable in different, user selectable configurations for which radio transmissions are made with different frequencies or signal formats so that the user can roam from a home network (PLMN A) to a another network (PLMN B) which operates in a different configuration to the HPLMN. The handset (1) includes a controller (8) to cause a search to be made for transmissions corresponding to a plurality of the different configurations when a configuration for a roamed network has been selected by the user so as to enable the handset to find the HPLMN when returning to the network coverage area of the HPLMN.

## Description

This invention relates to a mobile station for a mobile telecommunications system, that permits a user to select different operational configurations for use with different networks, in which radio transmissions are made with different characteristics.

Mobile stations such as mobile telephone handsets, are known which can operate such that the user can roam from a home public land mobile network (HPLMN) to other PLMNs which operate in different frequency bands or according to different modes with different signal transmission protocols. For example, PLMNs operating according to the GSM recommendations operate in different frequency bands. Many GSM PLMNs operate at 900 MHz whereas others operate at 1800 MHz and may provide co-extensive coverage, particularly in Europe. In USA, some GSM networks operate 1900 MHz.

As known in the art, GSM uses a TDMA modulation scheme with frequency hopping. However, other protocols have been proposed including CDMA for UMTS. Furthermore, signal protocols which are a variation on GSM have been proposed for certain satellite cellular networks.

Dual and tri-band mobile telephone handsets are known for use with GSM networks, which permit the user to select the frequency band to enable roaming to occur between networks that operate at different frequencies. Also, multi-mode handsets have been proposed to allow roaming between networks which operate according to different, signal protocols, such as GSM, satellite and CDMA.

Usually, call charges associated with roaming are more expensive than for the home network. However, when roaming with a conventional multi-band/mode handset, once the roamed network mode has been selected by the user, the handset will seek to operate in the frequency band and mode of the roamed network. The handset will only return back to the band/mode of the HPLMN if the user deliberately takes steps to switch the band/mode. Furthermore the user may actively select to work in one band or in one mode not supported by the operator. Then the phone would not even search for the operators network when starting up.

The present invention seeks to overcome these problems.

In accordance with the invention there is provided a mobile station for a mobile telecommunications system, which is operable in different networks, and having a preferred network for operation, comprising a manually operable device for a user to select an individual one of the different networks, and a controller to cause the mobile station to search for said preferred network, regardless of whether the user has manually selected another one of the networks for operation.

The preferred network may comprise a home network for the mobile station and so the mobile station when roaming, will attempt to achieve a connection to the home network and thereby reduce call charges.

If found, the mobile station may provide an indication to the user that a configuration corresponding to the home network has been found, in order to allow the user to switch to the home network. Also, automatic switching to the home network may be provided in these circumstances.

The different networks may utilise radio transmissions that have different predetermined characteristics and the mobile station may be operable to search for transmissions with said different characteristics. The different predetermined characteristics may comprise different frequency bands, and the mobile station may be operable to search for the different frequency bands. The frequency bands may be for a common signal transmission protocol such as GSM e.g. GSM 900, 1800 (DCS 1800) and GSM 1900.

The different predetermined characteristics may include different transmission protocols such that the mobile station searches for the different protocols. As an example, the different protocols may comprise modes for GSM or DCS and CDMA such as for UMTS.

The searching may be carried out on the basis of data held in a memory corresponding to different selectable configurations for the user. For example, the home network may support roaming to networks in a limited set of configurations and so the searching can be restricted to the particular set, indicated by the data in the memory. The searching may be carried out in a particular order of configurations.

The memory may comprise a smart card with user identification information stored thereon, such as a SIM card.

The mobile station may comprise a mobile telephone handset or other mobile equipment such as a personal data assistant (PDA) or a mobile computer with a modem.

The invention also includes a method of operating a mobile station for a mobile telecommunications system, which is operable in different networks and having a preferred network for operation and a manual control for permitting network selection, comprising causing the mobile station to search for the preferred network irrespective of whether another of the networks has been manually selected for operation.

Furthermore, the invention includes a memory device for use in the mobile station, which includes data corresponding to the configurations to be searched by the station, together with a method for programming the memory device with the data.

In order that the invention may be more fully understood an embodiment thereof will now be described by way of example with reference to the accompanying drawings in which:
Figure 1 is a schematic illustration of a mobile telephone handset configured to communicate with different PLMNs;
Figure 2 is a schematic block diagram of the circuits of the mobile telephone handset;
Figure 3 is a more detailed illustration of the SIM card shown in Figure 2;
Figure 4 illustrates the coverage areas of the PLMN A and PLMN B; and
Figure 5 is a schematic flow diagram of a search procedure carried out by the controller of the mobile telephone handset shown in Figure 3.

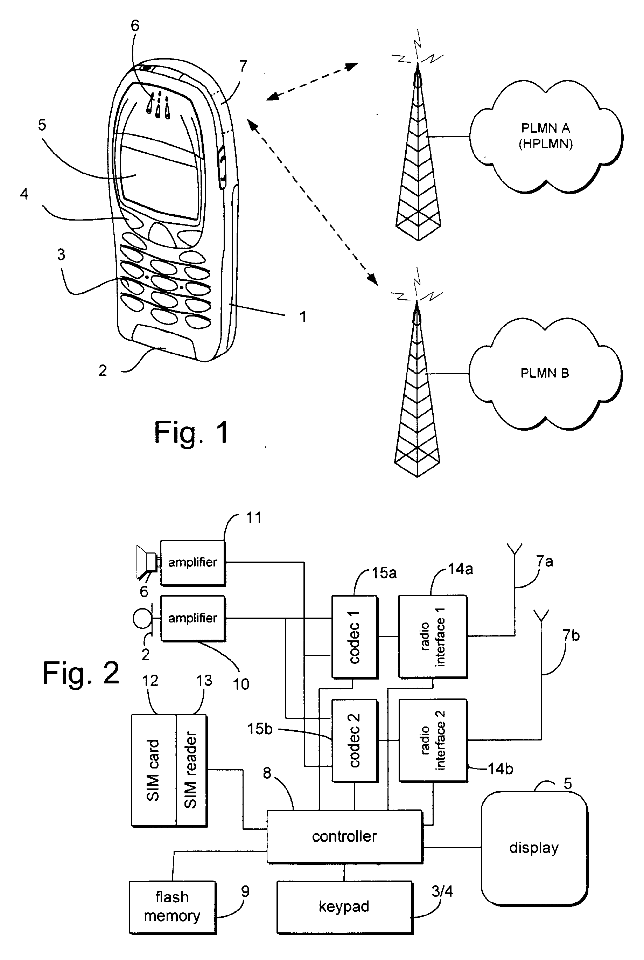

Referring to Figure 1, a mobile station in the form of a mobile telephone handset 1 includes a microphone 2, keypad 3, with soft keys 4 which can be programmed to perform different functions, a LCD display 5, an ear piece 6 and an antenna configuration 7 which is contained within the housing.

The mobile station 1 is operable in different configurations to communicate through cellular radio links with individual PLMNs shown schematically as PLMN A and PLMN B. In this example, network A is the HPLMN but the handset can roam to the network coverage of PLMN B.

PLMNs A and B may utilise different frequency bands and/or different signal transmission protocols. For example, PLMN A may be a GSM 1800 MHz network with a relatively small coverage area whereas PLMN B may be a GSM 900 MHz network extending over an entire country or state. Thus, in this example, the PLMNs A and B use the same signal protocols but different frequency bands. However, in another example, the signal protocols used for the two networks may be different. For example, one network may use GSM TDMA type signal protocols whereas the other may use CDMA such as UMTS.

Alternatively, PLMN B may be a GSM 1900 MHz network or a GSM type cellular satellite system, operating in the 200 MHz range.

Generally, the handset communicates over a cellular radio link with its home network PLMN A in a first configuration i.e. using a frequency band and signal transmission protocol appropriate to PLMN A. However, when the user roams to PLMN B, one of the keys on the handset e.g. one of the soft keys 4, may be operated to select a second operational configuration i.e. a frequency band and/or signal transmission protocol associated with PLMN B.

Figure 2 illustrates the major circuit components of the telephone handset 1. Signal processing is carried out under the control of a digital micro-controller 8 which has an associated flash memory 9. Electrical analogue audio signals are produced by microphone 2 and amplified by pre-amplifier 10 . Similarly, analogue audio signals are fed to ear-piece 6 through an amplifier 11. The micro-controller 8 receives instruction signals from the keypad and soft keys 3, 4 and controls operation of the LCD display 5.

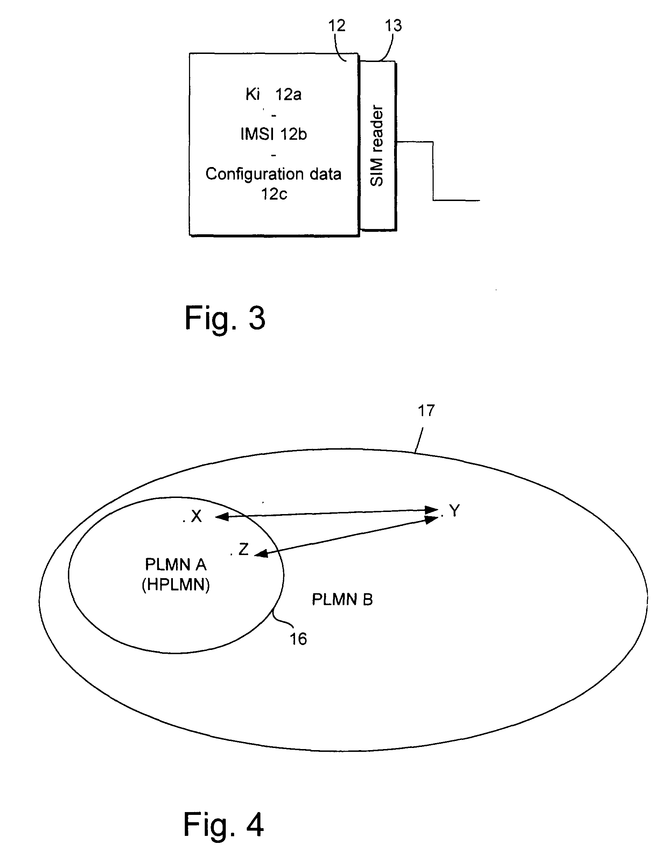

Information concerning the identity of the user is held on a smart card 12 in the form of a GSM SIM card which contains the usual GSM international mobile subscriber identity (IMSI) and an encryption key Kᵢ that is used for encoding the radio transmission in a manner well known ***per se.*** The SIM card is removably received in a SIM card holder 13. The data held in the SIM 12 is illustrated schematically in Figure 4. The stored data includes Kᵢ 12a, IMSI 12b and configuration data 12c to be described in more detail later.

Referring again to Figure 2, radio signals are transmitted and received in separate channels for the different operational configurations. For the first configuration, a transmit/receive antenna element 7a is connected through an rf stage 14a to a codec 15a configured to process signals in the first configuration under the control of the micro-controller 8. Similarly, signals for the second configuration are fed through an antenna element 7b connected to rf stage 14b and codec 15b. Considering an example where the first configuration is GSM 1800, the codec 15a receives analogue signals from the microphone amplifier 10, digitises them into a format for GSM signals and feeds them to rf stage 14a for transmission through antenna element 7a to PLMN A shown in Figure 1. Similarly, signals received from PLMN A are fed through antenna elements 7a to be demodulated in the rf stage 14a and fed to codec 15a, so as to produce analogue signals fed to the amplifier 11 and ear-piece 6.

Similarly, when roaming to PLMN B, antenna elements 7b, rf stage 14b and codec 15b process signals in a signal format appropriate for PLMN B, in an appropriate frequency band. For example, if PLMN B comprises a CDMA network, codec 15b will process appropriate CDMA signals and the rf stage 14b will be suitably configured for transmitting and receiving CDMA signals in an appropriate frequency band. If, alternatively, PLMN A and B both operate according to the same transmission protocol but in different frequency bands, it may be possible to merge the functionality of the codecs 15a, 15b into a single unit and provide a single tunable rf stage 14 capable of handling both frequency bands.

With a conventional dual band/mode phone, when the user roams from the coverage area of PLMN A to PLMN B, the configuration suitable for PLMN B may be manually selected by means of soft key 4. However, when the user then returns to the region of coverage of PLMN A, the configuration must be manually switched again to the band/mode of PLMN A otherwise the handset will continue to operate in the second configuration i.e. the band/mode appropriate for PLMN B. When the coverage areas for PLMN A and B are in different countries and do not overlap, the user is prompted to switch back to the configuration for PLMN A when returning home because otherwise, the handset does not respond. However, if the coverage areas overlap, the handset will continue to operate within the coverage area of PLMN B, with the disadvantage that the call charges, associated with the roaming to PLMN B are generally higher than those associated with PLMN A. The invention overcomes this problem, as will now be explained by way of specific example with reference to Figure 4.

In this example, PLMN A is GSM 1800 MHz cellular network covering e.g. a medium sized town whereas PLMN B is a GSM 900 MHz network with a coverage area of an entire country, including the town. Thus, as shown in Figure 3, the coverage area 16 of PLMN A lies wholly within the coverage area 17 of PLMN B. In this example, the user moves from location X within coverage area 16 of PLMN A, to location Y outside the coverage area 16 of PLMN A but within the coverage area 17 of PLMN B. Then, the user moves from location Y to location Z within coverage area 16 of PLMN A. The call charges associated with PLMN A are lower than those associated with PLMN B for the user since PLMN A is the home network and PLMN B is the roamed network.

At location X, the user can connect to PLMN A, with the handset in the first operational configuration i.e. GSM 1800 MHz. In location Y, the user has no alternative but to roam to the more expensive PLMN B by selecting the second operational configuration of the handset with soft key 4, namely GSM 900 MHz. When the user returns to location Z within the coverage area 16 of PLMN A, the telephone handset needs to be switched to the first, GSM 1800 MHz configuration if the more expensive roamed call charges associated PLMN B, are to be avoided.

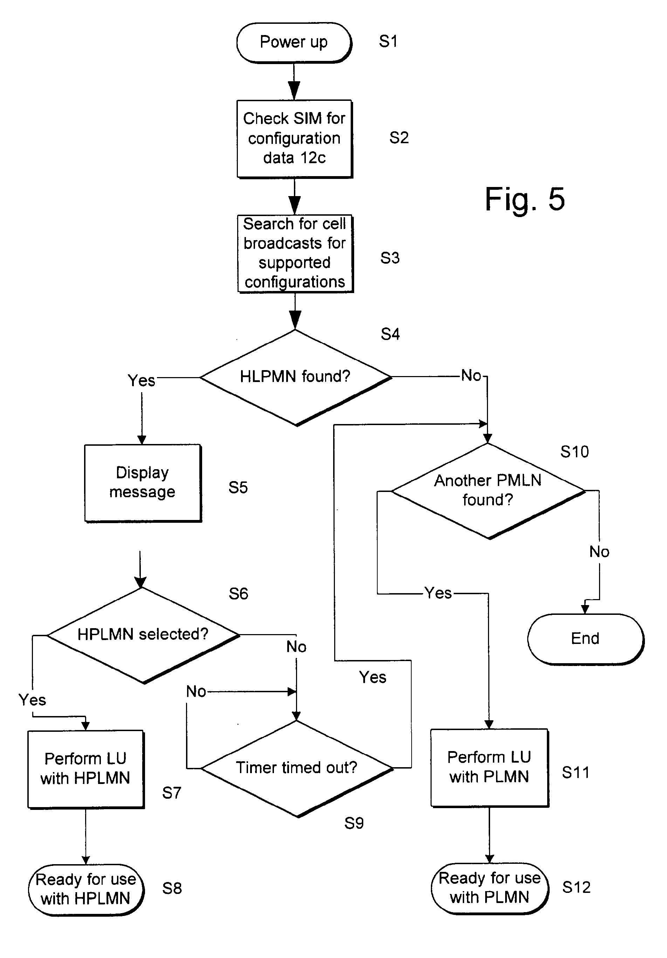

Figure 5 illustrates a routine carried out by the micro-controller 8 and the associated circuits of Figure 2, in accordance with the invention, to ensure that the handset is switched to the appropriate configuration. The process is carried out on each occasion that the handset is switched on although the process will be described in relation to location Z by way of example.

Referring to Figure 5, at step S1, the handset is powered up and at step S2, the configuration data 12c on SIM card 12 (Figure 3) is checked. The configuration data 12c indicates permitted operational configurations for the user. For example, the data may comprise information concerning the configuration for the HLMN A but may additionally include information concerning the permitted other configuration or configurations for the handset. This in turn will depend upon the commercial agreements between PLMN A and other PLMNs. In this example, PLMN A and B have a reciprocal billing arrangement so as to allow their subscribers to roam between networks. Thus, when a subscriber to PLMN A roams to PLMN B, the subscriber is billed for calls made through PLMN B but at a higher rate than for calls made through the home network PLMN A.

At step S3, the micro-controller 8 causes a search to be made for broadcast signals for the supported configurations. It will be understood that the networks PLMN A and B each transmit system information on cell broadcast channels or BCCHs in respective frequency bands and possibly different signal formats depending on the nature of the networks concerned.

At step S4, a determination is made as to whether a BCCH corresponding to the configuration of the HPLMN is found. In the example of Figure 4, this occurs when a BCCH for a GSM 1800 MHz network is found. This step is carried out irrespective of the network that was previously manually selected by the user.

If an 1800 MHz BCCH is found, a message is displayed under the control of micro-controller 8 on display 5, at step S5. This positively indicates to the user that it would be worthwhile switching the configuration of the handset 1, using soft key 4 in order to attempt to connect to the home network i.e. PLMN A. This would result in a reduced call charge as compared with PLMN B.

At step S6, the routine checks to see whether soft key 4 has been operated so as to select the HPLMN. If so, at step S7, a conventional location update (LU) is carried out with the HPLMN i.e. PLMN A, so as to render the handset ready for use with PLMN A as shown at step S8.

The micro-controller 8 operates an internal timer to give the user a time window to operate the soft key 4 and select PLMN A. Time-out of the timer is checked at step S9 and if the user does not select PLMN A at step S6 within the time period, the system attempts to set up the handset for PLMN B in the second configuration, as will now be explained.

Considering again step S4, if the BCCH for the HPLMN is not found, a check is made at step S10 to see whether the BCCH for another supported configuration can be found. For example, when the handset is at location Y in Figure 3, the HPLMN BCCH cannot be detected whereas the BCCH for PLMN B will be found. If no alternative BCCH for a supported configuration is found, the routine terminates because no call can be made but if an alternative BCCH for a supported configuration is found e.g. for PLMN B, a location update is performed at step S11 for the located PLMN, to render the handset ready for use as shown at step S12.

Thus from the foregoing, it will be seen that the mobile station 1, being operable in different networks, has a preferred network for operation, namely PLMN A, the home network in this example, and that a network selection can be manually carried out so that the user can roam to other networks, in this example, PLMN B. The manual selection may be carried out using the soft key 4. Subsequently, a search is carried out for the preferred network, regardless of whether the user has manually selected another network for operation. Thus, in this example, the HLPLMN - PLMN A is always sought irrespective of whether the user has manually selected roaming to PLMN B.

Many modifications and variations to the described embodiment of the invention can be made. For example, the flash memory 9 may store data for predetermined searching orders that can be used at step S3. The routine for step S3 may always search for the configuration of the HPLMN first but may search for other configurations in different orders depending on the recent history of use of the 'phone in order to speed up the searching on the basis of the likely outcome.

Also, the steps S6, S9 and possibly S5 may be omitted, so that when the HPLMN is found, the location update for the HPLMN is automatically carried out without waiting for operation of the soft key 4 by the user.

## Claims

1. A mobile station (1) for a mobile telecommunications system, which is operable in different networks, and having a preferred network (HPLMN) for operation, comprising a manually operable device (4) for a user to select an individual one of said different networks, and **characterised by**
a controller (8) to cause the mobile station to search for said preferred network, regardless of whether the user has manually selected another one of the networks for operation.

2. A mobile station according to claim 1 wherein the preferred network comprises a home network (HPLMN) for the mobile station.

3. A mobile station according to claim 1 or 2 wherein the different networks utilise radio transmissions that have different predetermined characteristics and the mobile station is operable to search for transmissions with said different characteristics.

4. A mobile station according to claim 3 wherein the different predetermined characteristics for the networks comprise different frequency bands, and the mobile station is operable to search for said different frequency bands.

5. A mobile station according to claim 4 wherein the different frequency bands are for a common signal transmission protocol.

6. A mobile station according to claim 5 wherein the common protocol comprises GSM and/or DCS.

7. A mobile station according to any preceding claim wherein the different predetermined characteristics for the networks comprise different transmission protocols, and the mobile station is operable to search for said different transmission protocols.

8. A mobile station according to claim 7 wherein the different protocols include GSM and UMTS.

9. A mobile station according to any preceding claim wherein the controller is operable to cause a user discernible indication to be provided that radio transmissions corresponding to one of said networks other than the selected network, are being found.

10. A mobile station according to claim 9 including a visual display (5), the controller being operable to cause said indication to be provided on the display.

11. A mobile station according to any preceding claim wherein the controller is operable to search for transmissions corresponding to the different networks in at least one predetermined order.

12. A mobile station according to any preceding claim including a memory (9, 12) that stores data corresponding to the different selectable networks for the user.

13. A mobile station according to claim 12 wherein the memory comprises a removable smart card (12) with user identification information stored thereon.

14. A mobile station according to claim 13 wherein the memory comprises a SIM card (12)

15. A mobile station according to any preceding claim comprising a mobile telephone handset (1).

16. A mobile station according to any preceding claim, comprising a PDA.

17. A mobile station according to any preceding claim including a keypad (3, 4) operable to select the network.

18. A method of operating a mobile station for a mobile telecommunications system, which is operable in different networks and having a preferred network for operation and a manual control for permitting network selection, comprising causing the mobile station to search for the preferred network irrespective of whether another of the networks has been manually selected for operation.

19. A method according to claim 18 wherein the preferred network is a home network for the mobile station, and including searching for the home network irrespective of whether another of the networks has been manually selected for operation .

20. A method according to claim 18 or 19 wherein the different networks operate in different frequency bands, and including carrying out the search in said different frequency bands.

21. A method according to claim 18, 19, or 20 wherein the different networks operate according to different transmission protocols, and including carrying of the search for network transmissions in said different transmission protocols.

22. A method according to any one of claims 18 to 21 wherein the mobile station is operable in a predetermined configuration one of the user selectable configurations corresponding to a home network for the user, and the method includes causing the mobile station to search for transmissions corresponding to the home network when another of the user selectable configurations has been selected.

23. A method according to claim 19 including providing a display to the user to indicate that the home network is available for use if transmissions in the configuration for the home network are found.

24. A method according to claim 19 including selecting the configuration for the home network when found.

25. A method according to any one of claims 18 to 24 including searching for the networks in at least one predetermined order.

26. A memory device for use in a mobile station for a telecommunications system, which is operable in different networks and having a preferred network for operation, the memory device including data corresponding to networks to be searched and an indication of the preferred network so that a search can be carried out for the preferred network irrespective of the network manually selected by the user.

27. A memory device according to claim 26 wherein the data for the preferred network corresponds to the configuration of a home network for the user.

28. A memory device according to claim 27 that comprises a smart card (12) with user identification information stored thereon.

29. A method of programming a memory device as claimed in claim 26 including storing data in the memory corresponding to the configuration for the home network of the user.
